# EUROPÄISCHE PATENTSCHRIFT

(11) **EP 0 376 054 B1**
(45) Veröffentlichungstag und Bekanntmachung des Hinweises auf die Patenterteilung: **02.06.1993**
(21) Anmeldenummer: 89122986.6
(22) Anmeldetag: 13.12.1989
(51) Int. Cl.: B60C 23/04, G01L 7/06, G01L 17/00

(54) **Vorrichtung mit einem um eine Drehachse bewegten Behälter, insbesondere Vorrichtung zum Messen des Reifendruckes in einem Luftreifen**
Apparatus having a vessel rotating around an axis, in particular an apparatus for measuring the pressure in a tyre
Dispositif comportant un récipient tournant autour d'un axe, en particulier dispositif de mesure de la pression dans un pneumatique

(30) Priorität: 24.12.1988 DE 3843814
(43) Veröffentlichungstag der Anmeldung: 04.07.1990
(73) Patentinhaber: ALLIGATOR VENTILFABRIK GMBH, D-89526 Giengen (DE)
(72) Erfinder: Franke, Horst, Prof. Dipl.-Ing., D-7080 Aalen (DE)
(74) Vertreter: Hiebsch, Gerhard F., Dipl.-Ing.

(56) Entgegenhaltungen:
- EP-A- 0 149 489
- DE-A- 3 413 209
- DE-A- 3 734 053
- FR-A- 2 276 187
- US-A- 2 837 175

## Beschreibung

Die Erfindung betrifft eine Vorrichtung mit einem um eine Drehachse bewegten Gehäuse nach dem Oberbegriff des PATENTANSPRUCHES 1.

Bei einer Vorrichtung gemäß DE-A- 30 37 722 ist das Fühlelement als Druckgeber mit vom Luftdruck beeinflußbarem Saugkreis an jedem Fahrzeugreifen eines Fahrzeuges festgelegt. Dieser Druckgeber wirkt mit eine festliegenden Aufnehmer zusammen, der an einen freischwingenden Oszillator sowie an eine Auswerteschaltung zur Berechnung und Anzeige des Reifendruckes angeschlossen ist.

Eine derartige Anordnung ist mit sehr hohen Fertigungskosten behaftet, weshalb mit dem Gegenstand der DE-A- 37 34 053 eine Verbesserung vorgeschlagen wird; das Fühlelement soll als Faltenbalg in etwa achsparalleler Bewegungsrichtung angebracht und mit einem in Abängigkeit vom Reifendruck an der Reifenaußenseite achsparallel verschiebbaren Dauermagneten verbunden sein, wobei der Dauermagnet bei normale Reifendruck in einer dem Meßwertsensor nahen Stellung ruht und dieser Abstand bei vermindertem Reifendruck größer ist.

Als stationärer Aufnehmer wird ein elektronisches Bauelement vorgeschlagen, welches dank des sog. Halleffektes jeweils senkrecht zu einem fließenden Strom und eine Magnetfeld eine Spannung erzeugt. Der erwähnte Halleffekt geht davon aus, daß in elektrischen Leitern, die sich in eine homogenen Magnetfeld befinden und in denen dazu senkrecht ein elektrischer Strom fließt, senkrecht zum Magnetfeld und senkrecht zum Strom eine Spannungsdifferenz entsteht. Die Größe des Effektes ist vom Leitermaterial abhängig und wird durch die jeweilige Hallkonstante gekennzeichnet.

Es hat sich nun in der Praxis gezeigt, daß bei um die Radachse rotierenden Meßwertgeber infolge von -- durch die auftretende Fliehkraft hervorgerufenen -- Reibungskräften zwischem dem Faltenbalg bzw. dem Halter des Dauermagneten einerseits sowie dem Druckrohr anderseits die zum Messen erforderlich axiale Bewegung des Dauermagneten behindert werden kann. Es tritt eine Hysterese auf. Durch letztere wird bislang die Erfüllung der Forderung eines linearen drehzahlunabhängigen Zusammhanges zwischen dem Reifendruck und der Bewegung des Meßgebers -- insbesondere bei großen Drehzahlen --behindert. Hier Abhilfe zu schaffen, ist Ziel der Erfindung, wobei übergeordnet eine Vorrichtung angeboten werden soll, die auch in andere Systeme eingeseht zu werden vermag.

Zur Lösung dieser Aufgabe führt die lehre nach Patentanspruch 1. Zwischen Druckrohr und Gleitkörper bzw. Faltenbalg an dem radial nach außen weisenden Teil von dessen Umfang ist eine Flüssigkeit bzw. eine viskose Masse als reibungsminderndes Element angeordnet, d.h. ein Raum zwischen Druckrohr und Gleitkörper bzw. Faltenbalg ist mit jener Flüssigkeit od.dgl. teilweise gefüllt - Gleitkörper bzw. Faltenbalg schwimmen auf der Flüssigkeit, die sich an dem nach außen weisenden Teil des Druckrohres ansammelt.

Dieser Erfindungsgedanke, der Fliehkraft des rotierenden Systems die Auftriebskraft des schwimmenden Teiles entgegenwirken zu lassen -- und damit einen Materialkontakt zu unterbinden, der zu einer Hysterese führt -- ist auch außerhalb der Reifendruckmessung einsetzbar, weshalb für diesen Gedanken für Systeme Schutz begehrt wird, bei denen in einem unterworfenen Hüllelement ein i.w. lose zugeordnetes Teil auf einem Flüssigkeitspolster ruht.

Die Kompensation der Fliehkraft durch die Auftriebskräfte einer Flüssigkeit od.dgl. zwischen Druckrohr und Gleitkörper oder Faltenbalg führt zu einer völligen Ausschaltung der eingangs geschilderten Meßstörungen, wenn die Gewichtskraft des Schwimm- oder Gleitkörpers und des Faltenbalges kleiner ist als die Gewichtskraft der verdrängten Flüssigkeit. Die Flüssigkeitsreibung verursacht keine Hysterese.

Die Gestaltung des Faltenbalges und des den Dauermagneten aufnehmenden Gleitkörpers oder Magnethalters wird bezüglich ihrer Volumensteile erfindungsgemäß so ausgeführt, daß der Abstand der Mittellinie des Faltenbalges bzw. des Magnethalters mit Dauermagnet zur Flüssigkeitsoberfläche gleich ist. Die Systemmittellinie des Schwimmkörpers ist parallel zur Flüssigkeitsoberfläche. Der Grad der Flüssigkeitsfüllung hängt von Volumen und Gewicht des Faltenbalges und des Gleitkörpers mit dem Magneten ab.

Im Rahmen der Erfindung liegen auch Ausgestaltungen, bei denen zum einen die Festkörperreibung durch den Einsatz einer Flüssigkeit bzw. einer viskosen Masse verhindert wird und zum anderen als zusätzliche Stützen Rollreibung erzeugende Rollkörper z.B. zwischen Druckrohr und Gleitkörper in Form von Kugeln, Rollen oder Gleitlagern zur Meidung der Gleitreibung eingebracht sind.

So ist nach einem weiteren Merkmal der Erfindung zwischen dem Druckrohr und dem gegebenenfalls hohlen Gleitkörper bzw. Magnethalter zumindest ein Rollkörper -- also eine Kugel, ein zylindrischer Bolzen od.dgl. -- in eine seiner Form entsprechende Rollnut des einen Reibungs- oder Gleitpartners eingelegt und wird von einer rinnenartigen Ausnehmung des anderen Gleitpartners übergriffen. Der Rollkörper rollt in Bewegungsrichtung des Faltenbalges ab - die Rollreibung ist günstiger als die bisher hier übliche Gleitreibung und vermindert auch den Verschleiß an den Gleitpartneroberflächen. Bei einer besonderen Ausgestaltung ist der Rollkörper in einem der Gleitpatrone gehalten und wandert auf einer Fläche des anderen Gleitpartners.

Bei Verwendung von Rollen wird eine linienförmige Berührung erreicht und damit die Flächenpressung gegenüber der Punktberührung im Falle von Kugeln erheblich reduziert.

Bezüglich anderer erfindungsgemäßer Merkmale wird auf die Unteransprüche Bezug genommen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: ein Federbein eines Kraftfahrzeuges mit angeschlossenem Fahrzeugreifen und Reifendruckgeber im Längsschnitt;
- Fig. 2:: den gegenüber Fig. 1 vergrößerten Reifendruckgeber mit einem Felgenabschnitt des Fahrzeugreifens;
- Fig. 3:: einen gegenüber Fig. 2 vergrößerten Ausschnitt einer erfindungsgemäßen Ausführung;
- Fig. 4:: die Ausführung der Fig. 3 in anderer Betriebsstellung;
- Fig. 5:: den Querschnitt nach Schnittlinie V - V in Fig. 3 durch eine weitere Ausführung des Reifendruckgebers;
- Fig. 6:: einen Längsschnitt durch eine andere Ausführungsform des Reifendruckgebers.
- Fig. 7:: einen Längsschnitt durch einen Reifendruckgeber mit Flüssigkeitsfüllung;
- Fig. 8:: den Schnitt durch Fig. 7 nach deren Linie VIII-VIII;
- Fig. 9:: eine den Fig. 6, 7 entsprechende Darstellung eines weiteren Reifendruckgebers.

Ein Fahrzeugrad 10 ist am unteren Teil eines Federbeines 11 eines nicht weiter dargestellten Kraftfahrzeuges festgelegt. Das Federbein 11 endet an einem Spurstangenhebel 12, unterhalb dessen ein Führungsgelenk 13 für einen Querlenker 14 zu erkennen ist.

Das Fahrzeugrad 10 besteht aus einer -- mit einer Radnabe 19 verschraubten und um einen Achszapfen 18 drehbaren -- Radschüssel 20 mit angeschlossenem Felgenring 21, an dessen Felgenhörner 22 sich beidseits eines Felgenbettes 23 Randwulste 26 eines Luftreifens 27 anschmiegen. Dessen Schichtaufbau ist aus Gründen besserer Übersichtlichkeit in der Zeichnung vernachlässigt.

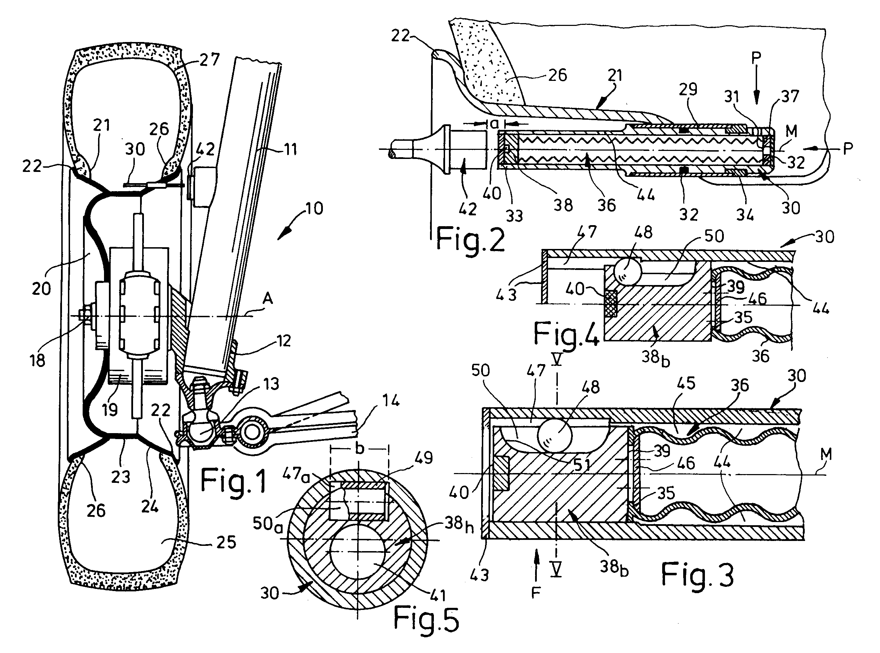

Im Bereich eines stufenartigen Absatzes 24 des zum Federbein 11 weisenden Felgenhornes 22 wird dieses von einem in Fig. 1 etwa zur Achslinie A parallelen Rohr 30 durchsetzt.

Gemäß Fig. 2 ist im Felgenring 21 eine Haltehülse 29 für das als Druckrohr ausgebildete Rohr 30 festgelegt. Zwischen der Haltehülse 29 und dem hier an seinem freien Ende durch Stirnplatten 33, 33_{f} geschlossenen Druckrohr 30 befindet sich ein dichtender O-Ring 32. Das Druckrohr 30 ist durch einen Rastring 34 in der Haltehülse 29 festgelegt.

In dem zylindrischen Druckrohr 30 verläuft koaxial zu dessen Längsachse M ein Faltenbalg 36 aus Metall, der einends an einem Faltenbalghalter 37 festliegt und -- in Fig. 2 über einen Druckrohrdurchbruch 31 -- von innen mit dem Reifendruck P beaufschlagt wird. Hierdurch wird ein am Faltenbalg 36 endwärts in einem verschieblichen Magnethalter 38 befestigter Permanentmagnet 40 in axialer Richtung druckabhängig bewegt. Die Rohrinnenfläche 44 dient bei der Axialbewegung des Magnethalters 38 als Führung.

Karosserieseitig ist bei 42 ein Magnetfeldsensor (Hall-Element) befestigt. Die auf diesen wirkende magnetische Feldstärke ist abhängig von der Distanz a zwischen dem Permanentmagneten 40 und dem Magnetfeldsensor 42. An ihm werden bei rotierenden Reifen Impulse erzeugt, deren Amplitudenhöhe dem Reifendruck proportional ist.

Der bolzenartige Magnethalter 38_{b} nach Fig. 3 stößt in der dort gezeigten Endlage an eine Anschlagplatte 43, die den Rohrinnenraum 45 endwärts abdichtet. Ein Endwulst 35 des im Druckrohr 30 mit Spiel angebrachte Metallfaltenbalges 36 ist an der Magnethalterstirn 39 druckdicht befestigt.

Zwischen dem Druckrohr 30 und seinem Magnethalter 38 ist im Innenraum 45 zumindest eine Kugel 48 gelagert, die einerseits in einer Rollnut 50 des Magnethalters 38 rollt sowie anderseits in einer in ihrem Querschnitt gebogenen Rinne 47 des Druckrohres 30 geführt wird. Rollnut 50 und Rinne 47 sind einander radial zugeordnet und zwar an der in Fliehkraftrichtung F weisenden Seite des Umfanges von Magnethalter 38_{b}. Zumindest die Rollnut 50 ist beidends durch Anschlagflächen 51 begrenzt, die den Rollweg der Kugel 48 bestimmen und damit auch die Länge des Relativweges zwischen Magnethalter 38_{b} und Druckrohr 30.

Beim Ausführungsbeispiel der Fig. 5 ist statt der Kugel 48 eine zylindrische Hohlrolle 49 in eine querschnittlich rechteckige Rollnut 50ₐ des hier aus Gewichtsgründen mit einer Bohrung 41 versehenen Magnethalters 38ₕ eingesetzt. Entsprechend befindet sich im Druckrohr 30 eine Rinne 47ₐ einer Breite b.

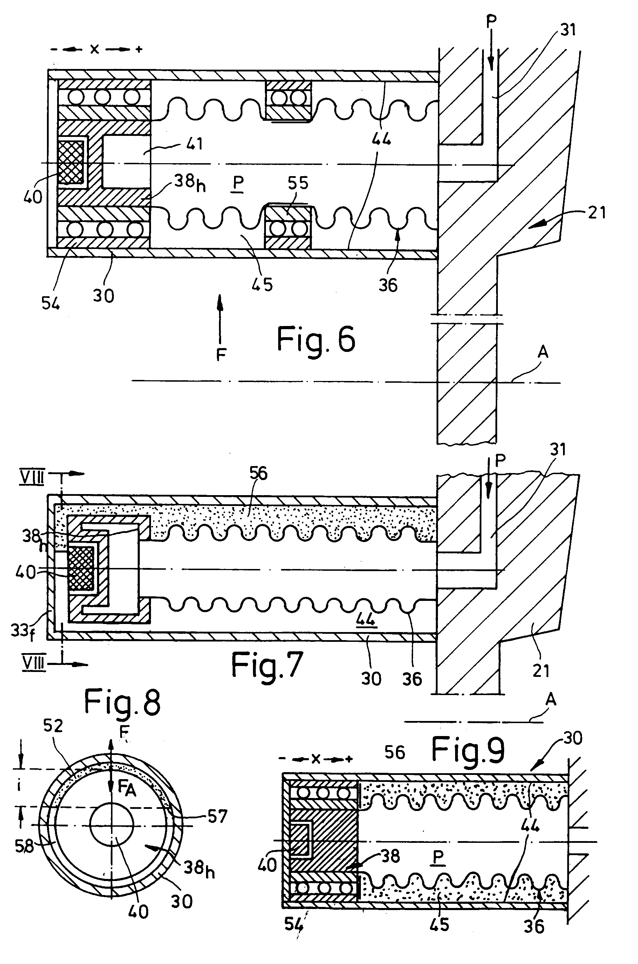

Beim Ausführungsbeispiel der Fig. 6 mit einem zur Gewichtsminderung als Hohlkörper ausgebildeten Magnethalter 38ₕ sind zwischen diesem sowie der Rohrinnenfläche 44 des Druckrohres 30 axial führende Kugellager 54 od. dgl. vorgesehen, die durch Kugellager 55 zwischen Druckrohr 30 und Faltenbalg 36 ergänzt sein können.

Bei der Ausführung nach Fig. 7, 8 befindet sich zwischen dem Druckrohr 30 und dem einen Auftriebskörper darstellenden Magnethalter 38ₕ bzw. dem Faltenbalg 36 eine Flüssigkeit bzw. eine viskose Masse 56, die den Festkörperkontakt Druckrohr 30 einerseits sowie Magnethalter 38 bzw. Faltenbalg 36 anderseits durch ein Aufschwimmen des beweglichen Systems 38/36 beseitigt und damit die die Hysterese verursachende metallische Reibung vermeidet.

Die Flüssigkeit 56 wird bei der Raddrehung durch die Fliehkraft F an die achsferne Druckrohrinnenfläche 44 geführt. Der Fliehkraft F entspricht die Auftriebskraft F_{A}.

In Fig. 8 ist die Flüssigkeit 56 deutlich in einem Spaltraum 58 zwischen Druckrohr 30 und Magnethalter 38ₕ zu erkennen. Eine Festkörperberührung findet hier im rotierenden Fall nicht statt, sobald die Fliehkräfte bestimmte Werte überschreiten. Die Gestaltung des Faltenbalges 36 und des Magnethalters 38ₕ sowie der Flüssigkeitsfüllung ist bezüglich ihrer Volumensteile so erfolgt, daß die Eintauchtiefe i aller Teile des Faltenbalges 36 bzw. des Magnethalters 38ₕ mit dem Dauermagneten 40 gleich groß ist, d.h. die Mittellinien M von der Flüssigkeitsoberfläche 57 einen gleichen Abstand haben.

Fig. 9 stellt eine Kombinationslagerung dar; der Magnethalter 38 wird mittels des axial wirkenden Lagers 54, beispielsweise einen Kugelkäfig, geführt, der Faltenbalg 36 durch die beschriebene Flüssigkeit 56 getragen.

## Patentansprüche

1. Vorrichtung mit einem um eine Drehachse (A) bewegten Gehäuse (30), in dem ein mit ihm umlaufender und relativ zu ihm zumindest parallel zur Drehachse bewegter Gleitkörper (38_{b}, 38ₕ) aufgenommen ist,
dadurch gekennzeichnet,
daß zwischen dem umlaufenden Gehäuse (30) und dem mit ihm drehenden Gleitkörper (38_{b}, 38ₕ) eine Flüssigkeit (56) oder eine viskose Masse angeordnet ist, die beim Drehen dieser Vorrichtung zumindest an deren in Richtung der Fliehkraft (F) weisenden Seite als materialkontaktfrei tragendes Auftriebspolster dient.

2. Vorrichtung nach Anspruch 1, dadurch gekennzeichnet, daß zum Messen des Reifendruckes in einem Luftreifen (27) eines Fahrzeugrades (10) der Gleitkörper (38) einen Teil eines Meßelements darstellt und durch einen vom Reifendruck beaufschlagbaren Faltenbalg (36) oder ein Fühlelement mit dem Luftvolumen verbunden ist, das im Abstand zur Radachse als Drehachse (A) in einem um diese drehenden Druckrohr (30) als Gehäuse geführt wird und relativ zu einem Gegenmeßelement (42) bewegbar angeordnet ist, wobei die Flüssigkeit (56) bzw. die viskose Masse zwischen dem Gleitkörper (38) bzw. dem Faltenbalg (36) und dem geschlossenen Druckrohr (30) angeordnet ist sowie einen Spaltraum (58) zwischen dem Druckrohr (30) und dem Gleitkörper (38) teilweise ausfüllt.

3. Vorrichtung nach Anspruch 2, dadurch gekennzeichnet, daß der Mittellinienabstand von Faltenbalg (36) und Gleitkörper (38ₕ) von der Flüssigkeitsoberfläche (57) gleich ist.

4. Vorrichtung nach einem der Ansprüche 1 bis 3, dadurch gekennzeichnet, daß der Gleitkörper (38_{b}, 38ₕ) querschnittlich dem Innenquerschnitt des Gehäuses oder Druckrohres (30) angepaßt und als Schwimmkörper, insbesondere Hohlkörper, ausgebildet ist.

5. Vorrichtung nach Anspruch 1 oder 4, dadurch gekennzeichnet, daß die Gewichtskraft des Gleitkörpers (38_{b}, 38ₕ) geringer ist als die Gewichtskraft der verdrängten Flüssigkeit (56).

6. Vorrichtung nach wenigstens einem der Ansprüche 1 bis 5, gekennzeichnet durch zumindest einen zwischen dem Gehäuse oder Druckrohr (30) und dem Gleitkörper (38_{b}) geführten Rollkörper (48, 49; 54).

7. Vorrichtung nach wenigstens einem der Ansprüche 1 bis 5, gekennzeichnet durch zumindest einen zwischen dem Gehäuse oder Druckrohr (30) und dem Gleitkörper (38ₕ) geführten Rollkörper (48, 49), der in eine Rollnut (50, 50ₐ) des Gleitkörpers (38_{b})frei eingelegt ist.

8. Vorrichtung nach Anspruch 6 oder 7, dadurch gekennzeichnet, daß der Rollkörper am Gleitkörper (38_{b}, 38ₕ)als Kugel (48) bzw. Bolzen (49) vorgesehen ist.

9. Vorrichtung nach Anspruch 7, dadurch gekennzeichnet, daß der Rollnut (50, 50ₐ) eine rinnenartige Ausnehmung (47, 47ₐ) in der Druckrohrwandung (44) zugeordnet ist, in die ein Teil des Rollkörpers (48, 49) eingreift, und/oder daß die Rollnut (50, 50ₐ) parallel zur Druckrohrachse (M) verläuft.

10. Vorrichtung nach einem der Ansprüche 6 bis 9, dadurch gekennzeichnet, daß der relative Weg zwischen der endwärts geschlossenen Rollnut (50, 50ₐ) und der Ausnehmung (47, 47ₐ) durch den an die Rollnutendflächen (51) stoßenden Rollkörper (48, 49) begrenzt ist.

11. Vorrichtung nach Anspruch 6 oder 7, dadurch gekennzeichnet, daß an der Innenseite (44) des Druckrohres (30) wenigstens ein axial führendes Lager (54) angebracht und gegen den Gleitkörper (38ₕ) abgestützt ist.

## Claims

1. Apparatus having a housing (30) rotating around an axis (A), in which a sliding body (38_{b}, 38ₕ) rotating therewith and rotating relative thereto at least parallel to the axis is received, characterised in that a fluid (56) or a viscous mass is arranged between the rotating housing (30) and the sliding body (38_{b}, 38ₕ) rotating therewith and upon rotation of this apparatus serves as a supporting lifting cushion preventing material contact at least on the side directed towards the centrifugal force (F).

2. Apparatus according to claim 1, characterised in that, in order to measure the pressure in a tyre (27) of a vehicle wheel (10), the sliding body (38) constitutes part of a measuring element and is connected by means of bellows (36) subjected to the tyre pressure or a sensing element to the air volume, which is guided as a housing at a distance from the wheel axis forming the axis (A) in a pressure tube (30) rotating around the said axis and is arranged to rotate relative to a counter measuring element (42), the fluid (56) or the viscous mass being arranged between the sliding body (38) or the bellows (36) and the closed pressure tube (30) and partially filling a space (58) between the pressure tube (30) and the sliding body (38).

3. Apparatus according to claim 2, characterised in that the centre line distance between the bellows (36) and the sliding body (38ₕ) and the fluid surface (57) is identical.

4. Apparatus according to one of claims 1 to 3, characterised in that the cross section of the sliding body (38_{b}, 38ₕ) is adapted to the inner cross section of the housing or pressure tube (30) and is in the form of a floating body, especially a hollow body.

5. Apparatus according to claim 1 or claim 4, characterised in that the weight of the sliding body (38_{b}, 38ₕ) is less than the weight of the displaced fluid (56).

6. Apparatus according to at least one of claims 1 to 5, characterised by at least one rolling body (48, 49; 54) guided between the housing or pressure tube (30) and the sliding body (38_{b}).

7. Apparatus according to at least one of claims 1 to 5, characterised by at least one rolling body (48, 49) guided between the housing or pressure tube (30) and the sliding body (38_{b}) and freely mounted in a roller groove (50, 50ₐ) of the sliding body (38_{b}).

8. Apparatus according to claim 6 or claim 7, characterised in that the rolling body is provided on the sliding body (38_{b}, 38ₕ) in the form of a ball (48) or bolt (49).

9. Apparatus according to claim 7, characterised in that the roller groove (50, 50ₐ) is associated with a channel-like recess (47, 47ₐ) in the pressure tube wall (44), engaged by part of the rolling body (48, 49), and/or that the roller groove (50, 50ₐ) extends parallel to the pressure tube axis (M).

10. Apparatus according to one of claims 6 to 9, characterised in that the relative path between the roller groove (50, 50ₐ) closed at its ends and the recess (47, 47ₐ) is defined by the rolling body (48, 49) abutting against the roller groove end faces (51).

11. Apparatus according to claim 6 or claim 7, characterised in that at least one axially directed bearing (54) is mounted on the inner face (44) of the pressure tube (30) and is supported against the sliding body (38ₕ).

## Revendications

1. Dispositif comportant un carter (30) déplacé autour d'un axe de rotation (A), et dans lequel est logé un corps glissant (38_{b}, 38ₕ) en révolution avec lui et déplacé par rapport à lui au moins parallèlement à l'axe de rotation,
caractérisé
en ce qu'entre le carter (30) en révolution et le corps glissant (38_{b}, 38ₕ) tournant avec lui, est placé un liquide (56) ou une masse visqueuse, qui fait office de coussin de sustentation porteur, sans contact solide, lors de la rotation de ce dispositif, tout au moins sur le côté orienté dans la direction de la force centrifuge (F).

2. Dispositif selon la revendication 1, caractérisé en ce que pour mesurer la pression d'air dans un pneumatique (27) d'une roue (10) de véhicule, le corps glissant (38) représente une partie d'un élément de mesure et est relié au volume d'air par un soufflet (36) pouvant être sollicité par la pression d'air du pneumatique ou par un élément formant sonde, et en ce que cet élément de mesure est guidé, à distance de l'axe de roue constituant l'axe de rotation (A), dans un tube de pression (30) formant carter tournant autour de cet axe, et est disposé de manière mobile par rapport à un élément de mesure conjugué (42), le liquide (56) ou la masse visqueuse étant placé entre le corps glissant (38) avec le soufflet (36) et le tube de pression fermé (30), et remplissant partiellement un interstice (58) entre le tube de pression (30) et le corps glissant (38).

3. Dispositif selon la revendication 2, caractérisé en ce que les distances des lignes de centre du soufflet (36) et du corps glissant (38h) à la surface (57) du liquide, sont identiques.

4. Dispositif selon l'une des revendications 1 à 3, caractérisé en ce que le corps glissant (38_{b}, 38ₕ) est adapté, quant à sa section transversale, à la section transversale intérieure du carter ou du tube de pression (30), et est réalisé en tant que corps flottant, notamment sous la forme de corps creux.

5. Dispositif selon la revendication 1 ou 4, caractérisé en ce que le poids du corps glissant (38_{b}, 38ₕ) est plus faible que le poids du liquide (56) déplacé.

6. Dispositif selon l'une au moins des revendications 1 à 5, caractérisé par au moins un corps roulant (48, 49; 54) guidé entre le carter ou le tube de pression (30) et le corps glissant (38_{b})

7. Dispositif selon l'une au moins des revendications 1 à 5, caractérisé par au moins un corps roulant (48, 49) guidé entre le carter ou le tube de pression (30) et le corps glissant (38ₕ), et disposé librement dans une rainure de roulement (50, 50ₐ).

8. Dispositif selon la revendication 6 ou 7, caractérisé en ce que le corps roulant du corps glissant (38_{b}, 38ₕ) est prévu en tant que bille (48) ou rouleau (49).

9. Dispositif selon la revendication 7, caractérisé en ce qu'à la rainure de roulement (50, 50ₐ) est associé, dans la paroi (44) du tube de pression, un évidement (47, 47ₐ) en forme de canal, dans lequel s'engage une partie du corps roulant (48, 49), et/ou en ce que la rainure de roulement (50, 50ₐ) s'étend parallèlement à l'axe (M) du tube de pression.

10. Dispositif selon l'une des revendications 6 à 9, caractérisé en ce que la course de déplacement relatif entre la rainure de roulement (50, 50ₐ) fermée aux extrémités, et l'évidement (47, 47ₐ), est limitée par le corps roulant (48, 49) venant en butée contre les surfaces d'extrémité (51) de la rainure de roulement.

11. Dispositif selon la revendication 6 ou 7, caractérisé en ce que sur le côté intérieur (44) du tube de pression (30), est monté au moins un palier de guidage axial (54) s'appuyant sur le corps glissant (38ₕ).
